# EUROPEAN PATENT APPLICATION

(11) **EP 4 075 635 A1**
(43) Date of publication of application: **19.10.2022**
(21) Application number: 21168432.9
(22) Date of filing: 14.04.2021
(51) Int. Cl.: H02J 7/00, H02M 3/07

(54) **BATTERY MANAGEMENT CIRCUIT FOR A MOBILE DEVICE**

(71) Applicant: NXP B.V., 5656 AG Eindhoven (NL)
(72) Inventor: Shao, Bin, Redhill, RH1 1QZ (GB); Pakala, Sri Harsh, Redhill, RH1 1QZ (GB)
(74) Representative: Miles, John Richard

(57) **Abstract**

A battery management circuit (300) and method for a mobile device is disclosed. The battery management circuit (300) includes a power supply input (302) configured to receive power from an external power source and a system supply output (314). A battery supply terminal (312) is configured to be coupled to a battery (320) having a series arrangement of two or more battery cells (320a-b). A battery charging circuit includes a buck converter (308) having a buck converter input coupled to the power supply input and a buck converter output coupled to the system supply output (314). A battery isolation circuit (316) and a switched capacitor DC-DC converter (330) are arranged between the system supply output (314) and the battery supply terminal (312). The switched capacitor DC-DC converter (330) steps up the buck converter output voltage by a step-up factor during battery charging and steps down the battery voltage during battery discharge.

## Description

### FIELD

This disclosure relates to a battery management circuit for a mobile device and a method of battery management for a mobile device.

### BACKGROUND

Mobile devices such as mobile phones typically include a battery management circuit or system. When the battery management circuit is not coupled to an external power source, the management circuit controls the power supplied by the battery to the remainder of the mobile phone circuitry which is designed to operate at a specified voltage and current. Once connected or wirelessly coupled to an external power source, the battery management circuit may directly supply power to the remainder of the mobile device and control the battery charging. The battery charging may use a combination of a main battery charger which is typically an inductive charger and a parallel and fast charger which may optimize the charging time and longevity of the battery. In recent years, the power consumption of mobile devices has increased which has resulted in some mobile phones having two or more battery cells arranged in series to increase the usage time before re-charging. The series arrangement allows the same charging current to be used as a single battery cell.

### SUMMARY

Various aspects of the disclosure are defined in the accompanying claims. In a first aspect there is provided a battery management circuit for a mobile device, the battery management circuit comprising: a power supply input; a system supply output configured to provide power to further circuitry; a battery supply terminal configured to be coupled to a battery comprising a series arrangement of battery cells; a battery charging circuit comprising a buck converter having a buck converter input coupled to the power supply input and a buck converter output coupled to the system supply output; a battery isolation circuit and a switched capacitor DC-DC converter arranged between the system supply output and the battery supply terminal; wherein the battery management circuit is configured in a battery charge mode to control the switched capacitor DC-DC converter to step up the buck converter output voltage by a step-up factor and in a battery discharging mode, to control the switched capacitor DC-DC converter to step down the battery voltage by a step-down factor equal to the step-up factor.

In one or more embodiments, the battery may comprise a series arrangement of n cells and the step-down factor and step-up factor is n.

In one or more embodiments, the battery may comprise a series arrangement of 2 cells and the step-down factor and step-up factor is 2.

In one or more embodiments, the DC-DC converter may comprise: a controller; a first, second, third and fourth MOS transistor arranged in series between the battery supply terminal and a reference voltage terminal; a first fly capacitor having a first capacitor terminal coupled to the source of the first MOS transistor and the drain of the second MOS transistor and a second capacitor terminal coupled to the source of the third MOS transistor and the drain of the fourth MOS transistor; wherein the battery supply terminal is coupled to one of the source or drain of the first MOS transistor; the buck converter output is coupled to the source of the second MOS transistor and the drain of the third MOS transistor ; wherein the gates of the first and third MOS transistors are coupled to a first controller output and the gates of the second and fourth MOS transistors are coupled to a second controller output and wherein the controller is configured to: during a first phase of a DC-DC conversion cycle to switch the first and third MOS transistors on and the second and fourth MOS transistors off; and during a second phase of a DC-DC conversion cycle to switch the first and third MOS transistors off and the second and fourth MOS transistors on.

In one or more embodiments, the DC-DC converter may comprise a fifth, sixth, seventh and eighth MOS transistor arranged in series between the battery supply terminal and the reference voltage terminal; wherein the battery supply terminal is coupled to one of the source or drain of the fifth MOS transistor ; a second fly capacitor having a first capacitor terminal coupled to the source of the fifth MOS transistor and the drain of the sixth MOS transistor and a second capacitor terminal coupled to the source of the seventh MOS transistor and the drain of the eighth MOS transistor; wherein the buck converter output is coupled to the source of the sixth MOS transistor and the drain of the seventh MOS transistor; wherein the gates of the fifth and seventh MOS transistors are coupled to the second controller output and the gates of the sixth and eighth MOS transistors are coupled to the first controller output and wherein the controller is configured to: during a first phase of a DC-DC conversion cycle to switch the fifth and seventh MOS transistors off and the sixth and eighth MOS transistors on; and during a second phase of a DC-DC conversion cycle to switch the first and third MOS transistors off and the second and fourth MOS transistors on.

In one or more embodiments, the reference voltage is a ground voltage.

In one or more embodiments, the battery management circuit may comprise the battery isolation circuit and the switched capacitor DC-DC converter arranged in series between the system supply output and the battery supply terminal.

In one or more embodiments, the battery isolation circuit may comprise an MOS transistor having a gate connected to a controller output and configured to control the MOS transistor to isolate the battery from the buck-converter output and/or to regulate the charging current.

In one or more embodiments, the battery management circuit may comprise a series arrangement of the switched capacitor DC-DC converter and the battery isolation circuit between the system supply output and the battery supply terminal.

In one or more embodiments, the battery isolation circuit may comprise an MOS transistor having a gate connected to a controller output and configured to control the MOS transistor to isolate the battery from the buck-converter output.

In one or more embodiments, the battery management circuit may comprise a second charging circuit arranged between the power supply input and the battery supply terminal; wherein the battery management circuit is further configured to control the buck converter and the second charging circuit to charge the battery when in the battery charging mode and wherein the second charging circuit is configured to supply a higher charging current to a battery connected to the battery supply terminal than the buck converter.

In a second aspect, there is provided a method of battery management for a mobile device, the method comprising: in a battery charging mode: configuring the switched capacitor DC-DC converter to step up the buck converter output voltage by a step-up factor providing power via the buck converter to charge a battery comprising n cells connected in series via a switched capacitor DC-DC converter; providing power via a buck converter to further circuitry; and in a battery discharging mode: configuring the switched capacitor DC-DC converter to step down the battery voltage by a step-down factor equal to the step-up factor; providing power to the further circuitry from the battery via the switched capacitor DC-DC converter.

In one or more embodiments, the method may further comprise providing a battery isolation circuit comprising an MOS transistor between the buck converter output and the battery; and controlling the charging current provided by the buck converter in the charging mode by controlling the gate voltage of the MOS transistor.

In one or more embodiments, the method may further comprise providing a series arrangement of a battery isolation circuit and the switched capacitor DC-DC converter between the system supply output and the battery supply terminal.

In one or more embodiments, the battery isolation circuit comprises an MOS transistor between the buck converter output and the battery; and the method further comprises controlling the charging current provided by the buck converter in the charging mode by controlling the gate voltage of the MOS transistor.

In one or more embodiments, the method may comprise providing a series arrangement of the switched capacitor DC-DC converter and the battery isolation circuit between the system supply output and the battery supply terminal.

In one or more embodiments, the battery isolation circuit may comprise an MOS transistor, and the method may further comprise controlling the MOS transistor to isolate the battery from the buck-converter output.

In one or more embodiments, the method may further comprise providing a second charging circuit arranged between the power supply input and the battery supply terminal; and controlling the buck converter and the second charging circuit to charge the battery when in the battery charging mode and wherein the second charging circuit is configured to supply a higher charging current to a battery connected to the battery supply terminal than the buck converter.

### BRIEF DESCRIPTION OF THE DRAWINGS

In the figures and description like reference numerals refer to like features. Embodiments are now described in detail, by way of example only, illustrated by the accompanying drawings in which:
Figure 1 shows an example battery management system for a mobile device.
Figure 2 illustrates an example implementation of a fast charger using a DC-DC switched capacitor converter.
Figure 3 shows an example implementation of a switched capacitor DC-DC converter with a single flying capacitor.
Figure 4 shows an example dual-phase implementation switched capacitor DC-DC converter with two flying capacitors.
Figure 5 shows a known example of a battery management system for a two series cell battery.
Figure 6 illustrates a battery management system for a mobile device including a battery with a series arrangement of two battery cells according to an embodiment.
Figure 7 shows a switched capacitor DC-DC converter with a single flying capacitor configured for the battery management circuit of figure 6.
Figure 8 shows a switched capacitor DC-DC converter with a two flying capacitors configured for the battery management circuit of figure 6.
Figure 9 illustrates a battery management system for a mobile device including a two series cell battery according to an embodiment.
Figure 10 illustrates a method of battery management for a mobile device battery with a series arrangement of battery cells according to an embodiment.

### DETAILED DESCRIPTION OF EMBODIMENTS

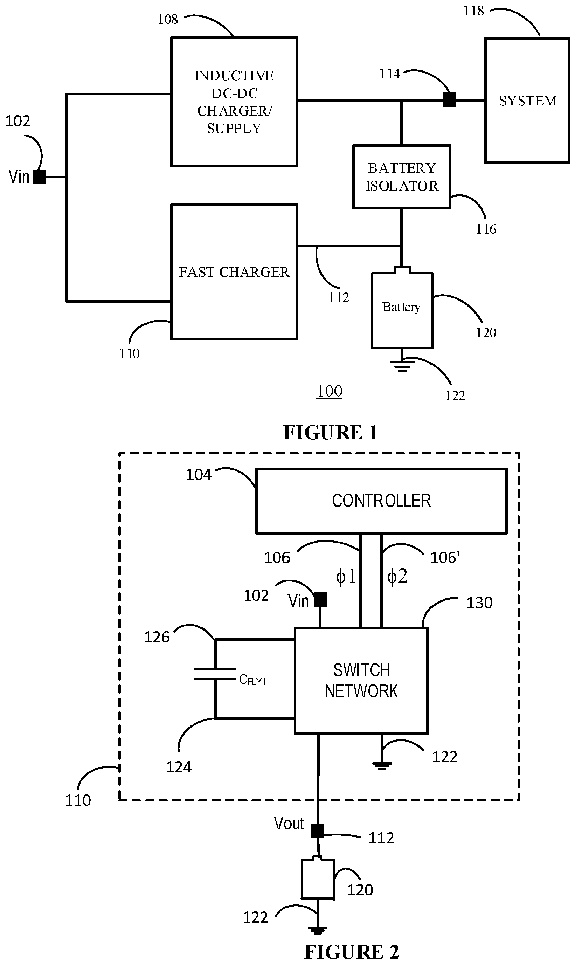

Figure 1 shows an example battery management system 100 for a mobile device. A power supply input 102 may be connected to an battery charging circuit 108 implemented as an inductive DC-DC conversion circuit such as a boost or buck-boost converter. The battery charging circuit output may be connected to system supply output 114. The system supply output is connected to system circuitry or further circuitry 118 which may include all the remaining circuitry to be powered in the mobile device. The system supply output 114 may be connected to a first terminal of the battery isolator 116. A second terminal of the battery isolator 116 may be connected to a battery terminal 112.

A fast charger 110 may have an input connected to the power supply input 102. The fast charger output may be connected to the battery terminal 112. A battery 120 may be connected between the battery terminal 112 and a reference voltage 122 which may be a ground.

In operation, the battery charger 108 may detect an external power supply connected to the power supply input 102. In this situation, the battery management system 100 may be considered to be in a charging mode. The charging of the battery 120 may use a combination of the (primary) battery charging circuit 108 which may supply a conventional battery charging using constant current and voltage and the fast charger 110 which supplies a charging current which is higher than that supplied by the battery charging circuit 108. The battery charging circuit 108 may also supply power to the system circuitry 108 if the device is active so that for example a mobile device can be used powered directly from an external supply. The isolator 116 may isolate the battery from the system supply output 114 when only fast charging is required. In this case the battery charging circuit 108 supplies all the output current to the system circuitry 118. The fast charger 110 may be disabled when only primary charging is required. In some examples the battery isolator may be included as part of the inductive charger 108.

If no external power supply is connected to the power supply input 102, then the system circuitry 118 must be supplied directly from the battery 120 and the battery management system 100 may be considered to be in a discharge mode. The battery isolator 116 may couple the battery terminal 112 directly to the system circuitry 118. As illustrated, the battery terminal 112 and battery charger 108 are connected to the system supply output 114. However in the discharge mode the battery charger 108 is disabled and all the power supplied from the battery is provided to the system circuitry 118.

Figure 2 shows a further detail of the fast charger 110 implemented within the battery management system 100. In this example the fast charger 110 is implemented using a switched capacitor DC-DC conversion circuit. The switched capacitor conversion circuit includes a switch network 130 which may be implemented with an arrangement of transistors controlled by a controller 104. The switched capacitor conversion circuit also includes a flying capacitor C_{FLY1} which may have a first terminal 124 connected to the switch network 130 and a second terminal 126 connected to the switch network 130. The power supply input 102 may be connected to the input of the switch network 130. The output of the switch network 130 may be connected to the battery terminal 112. A battery 120 connected to battery terminal 112 may have an effective load capacitance indicated.. As illustrated in figure 2, the controller 104 may supply to clocks on respective outputs 106 and 106' denoted φ1 and φ2. The first clock φ1 is considered to be active in a first switching phase and inactive in a second switching phase. The clock φ2 is considered to be active in a second switching phase and inactive in a first switching phase. The combination of the first switching phase and the second switching phase may be considered to be a DC-DC conversion cycle. In other examples, the skilled person will appreciate that some switching networks may use multiple-phase clocks. The controller 104 may be implemented in hardware or a combination of hardware and software.

In operation, during the charging mode, the supply voltage received at VIN is typically greater than or equal to the maximum battery voltage. The fast charger switching network 130 transfers charge between the power supply input 102 and the battery terminal 112 and typically steps down the voltage Vin to provide the required voltage for the battery Vout.

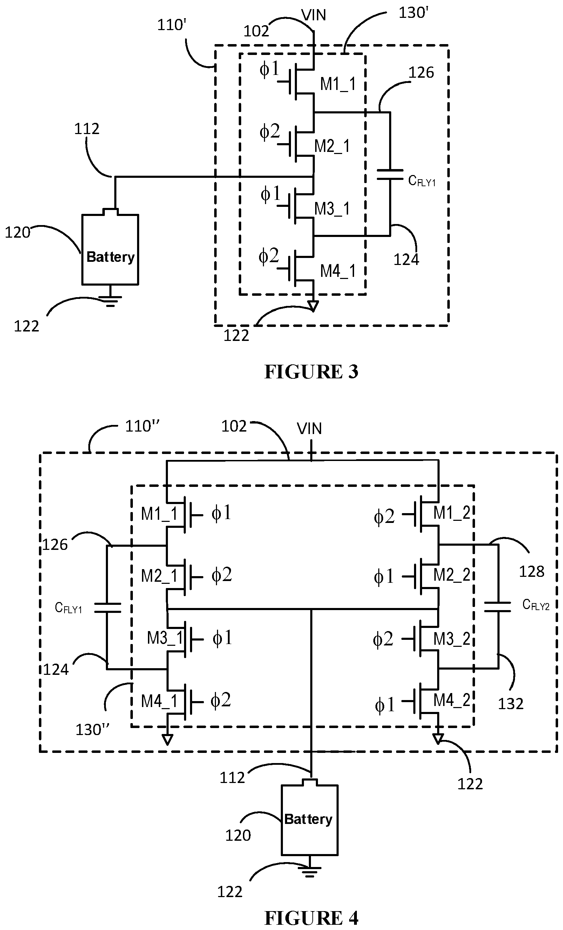

Figure 3 shows an example implementation of a 2-to-1 switched capacitor down converter which may be used to implement a fast charger 110' using NMOS transistors in the switch network 130'. Four NMOS transistors M1_1, M2_1, M3_1, and M4_1, are connected with the conducting channels in series between the power supply input 102 and a reference voltage 122 which is typically ground. The drain of the first NMOS transistor M1_1 is connected to the power supply input 102 and the source of the fourth NMOS transistor M1_4 may be connected to the ground 122. The flying capacitor C_{FLY1} may have a first terminal 126 connected to the drain of the first transistor M1_1 and the source of the second transistor M2_1. The second terminal of the flying capacitor 124 may be connected to the drain of the fourth transistor M4_1 and the source of the third transistor M3_1. The battery terminal connection 112 may be connected to the drain the third transistor M3_1 and the source of the second transistor M2_1. Switched capacitor down-converters are used for fast charging because the down conversion allows a higher input voltage and lower current to be used. This reduction in input current may enabling better thermal management and consequently higher charging currents resulting in faster charging time.

During the first switching phase (φ1 active) first and third transistors M1_1 and M3_1 are switched on and second and fourth transistors M2_1 and M4_1 are switched off. The fly capacitor C_{FLY1} is charged and is in series with the battery 120 so can deliver a charging current to the battery 120. During the second switching phase (φ2 active) first and third transistors M1_1 and M3_1 are switched on and second and fourth transistors M2_1 and M4_1 are switched off. The fly capacitor C_{FLY1} is in parallel with the battery 120 and provides a further charging current to the battery. For equal first and second switching phases, the duty cycle is 50% and the voltage at the first terminal 126 of the flying capacitor is Vin/2.

Figure 4 shows an example implementation of a 2-to-1 switched capacitor down converter which may be used to implement a fast charger 110" using NMOS transistors in the switch network 130". Four NMOS transistors M1_1, M2_1, M3_1, and M4_1, are connected with the conducting channels in series between the power supply input 102 and a reference voltage 122 which is typically ground as for fast charger 110'. A second set of four NMOS transistors M1_2, M2_2, M3_2, and M4_2, are connected with the conducting channels in series between the power supply input 102 and the reference voltage 122 which is typically ground. A second flying capacitor C_{FLY2} may have a first terminal 128 connected to the drain of the first transistor M1_2 and the source of the second transistor M2_2 of the second set of transistors. The second terminal 132 of the second flying capacitor C_{FLY2} may be connected to the drain of the fourth transistor M4_2 and the source of the third transistor M3_2 of the second set of transistors.

In operation, the first set of transistors M1_1, M2_1, M3_1, and M4_1 are controlled as previously described for the fast charger 110'. The second set of transistors M1_2, M2_2, M3_2 and M4_2 are controlled in a complementary way to the first set. During the second switching phase (φ2 active) first and third transistors M1_2 and M3_2 are switched on and second and fourth transistors M2_2 and M4_2 are switched off. The fly capacitor C_{FLY2} is charged and is in series with the battery 120 so can deliver a charging current to the battery. During the first switching phase (φ1 active) first and third transistors M1_2 and M3_2 are switched on and second and fourth transistors M2_2 and M4_2 are switched off. The fly capacitor C_{FLY2} is connected in parallel with the battery 120 and provides a further charging current to the battery. For equal first and second switching phases, the duty cycle is 50% and the voltage at the first terminal 128 of the flying capacitor C_{FLY2} is Vin/2. The arrangement of the switched capacitor dc-dc converter in fast charger 110" reduces output voltage ripple as either the first flying capacitor C_{FLY1} or the second flying capacitor C_{FLY2} is connected to the battery supply terminal 112 during each switching phase.

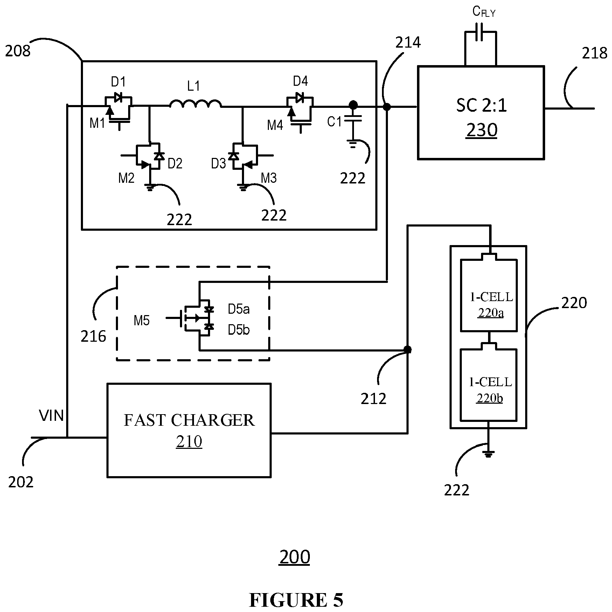

Figure 5 shows a known battery management system 200 for a mobile device using a battery 220 with a series connection of two 1-cell batteries 220a, 220b which is denoted as a 2S battery. The increased power requirements of mobile devices may make it desirable to have two one cell batteries connected in series rather than a single battery. This results in a battery voltage which is double the nominal voltage of a single one cell battery. In order to supply the system circuitry at the same voltage as for a single battery, which may be desirable for legacy reasons, a 2-to-1 voltage down converter may be required to provide the same voltage to the system circuitry as for a single battery cell. The battery management system 200 includes an inductive battery charger 208 which is a boost converter or a buck-boost converter 208, a switched capacitor 2-to-1 down converter 230, a battery isolator 216 and a fast charger 210.

The example implementation of the buck-boost converter 208 has a series arrangement of a first NMOS transistor M1, and a second NMOS transistor M2 arranged between a power supply input 202 and a ground 222. An inductor L1 may have a first terminal connected to a drain of the first transistor M1 and a drain of the second transistor M2. The inductor L1 may have a second terminal connected to a drain of a third NMOS transistor M3 and the source of a fourth transistor M2. The source of the third NMOS transistor M3 is connected to the ground 222. The drain of the fourth NMOS transistor M4 is connected to the inductive charger output 214. A capacitor C1 may be connected between the inductive charger output 214 and ground 222. The transistors M1, M2, M3, M4 have associated body diodes D1, D2, D3, and D4 between respective sources and drains of the transistors M1, M2, M3 and M4. The diodes D1 to D4 are intrinsic to the device and also provide a current path for the kick back current from the inductor L1 during the dead-time when the respective devices M1 to M4 are off.

A power supply input 202 is connected to the inductive charger 208 and the fast charger 210. The battery isolator 216 may have a PMOS transistor M5 and associated body diodes D5a and D5b The inductive charger output 214 is connected to the drain of the PMOS transistor M5 and the source of the PMOS transistor M5 is connected to the battery terminal 212. The fast charger output is connected to the battery terminal 212. The inductive charger output 214 is connected to an input of the switched capacitor 2-to-1 down converter 230. The output of the switched capacitor 2-to-1 down converter 230 is connected to the system supply output 218.

The 2S battery 220 may be connected between battery terminal 212 and ground 222. In operation, a controller (not shown) may detect an external power supply connected to the power supply input 202. The controller may then control the charging up of the battery 220 using a combination of the inductive charger 208 which may supply a trickle charge to the battery and the fast charger 210 which supplies a charging current which is higher than that supplied by the inductive charger 208. The inductive charger output 214 also supplies power to the system circuitry (not shown) via the a switched capacitor 2-to-1 down converter 230. A buck-boost controller (not shown) may control the operation of the buck-boost converter by generating appropriate timing signals applied to the gates of each of the transistors M1, M2 M3, and M4. For Boost operation, M1 is always on, M2 is always off and M3 and M4 are configured by the controller (not shown) to switch complimentary to each other. The duty cycle (D) of M3 determines the ratio between Vin and Vout (ideally: Vout/Vin = 1/(1-D). For Buck operation, M4 is always on, M3 is always off and M1 and M2 are configured by the controller (not shown) to switch complimentary to each other. The duty cycle of M1 determines the ratio between Vin and Vout. For buck-boost operation the controller may control the switching of all transistors M1-M4 as known to the skilled person.

The controller may isolate the battery from the inductive charger output 214 using battery isolator 206 when only fast charging is required. In this case the inductive charger 208 supplies all the output current to the system circuitry supply output 218 so that for example a mobile device can be used powered directly from an external supply. The controller may disable the fast charging when only trickle charging is required.

If no external power supply is connected to the power supply input 202, then the system circuitry must be supplied directly from the battery 220 and the battery management system 200 may be considered to be in a discharge mode. Because of the higher voltage of the dual cell battery, the controller may control the battery isolator 216 to couple the battery terminal 212 to the system supply output 218 via the switched capacitor 2-to-1 down converter 230. The inductive charger 208 has to be implemented as a boost or buck boost converter because the power supply input voltage received at Vin may be for example 5 V to support legacy USB inputs. The input voltage may need to be stepped up to charge the battery 220 because the inductive charger output 214 is in the dual cell voltage domain..

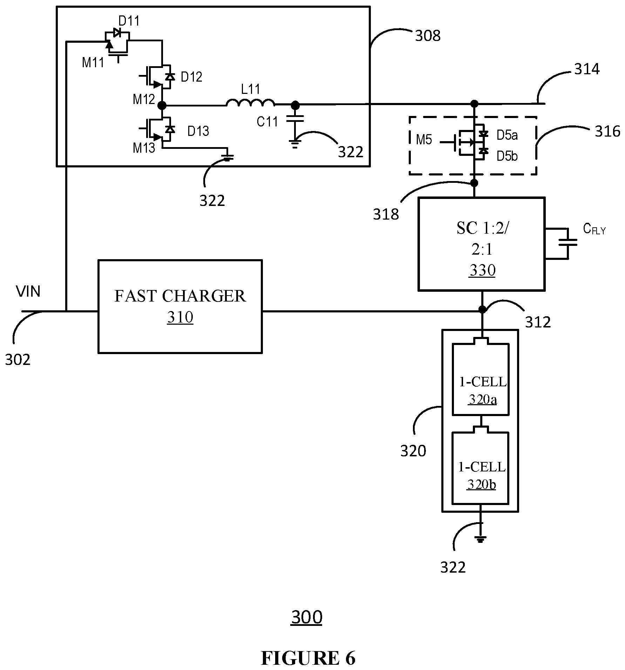

Figure 6 shows a battery management system 300 for a mobile device using a battery with a series connection of 1-cell batteries according to an embodiment. The battery management system 300 includes an inductive charger 308 which is implemented as a buck converter, a switched capacitor 1-to-2 and 2-to1 up-down converter 330, a battery isolator 316 and an optional fast charger 310.

The example implementation of the buck converter 308 has a series arrangement of a first NMOS transistor M11, a second NMOS transistor M12 and a third NMOS transistor M13 arranged between a power supply input 302 and a ground 322. An inductor L11 is connected between the drain of third transistor M13 and the inductive charger output. The inductive charger output is connected to the system supply output 314.

A capacitor C11 is connected between the inductive charger output 314 and ground 322. The transistors M11, M12 and M13 have associated body diodes D11, D12, D13 between respective sources and drains of the transistors M11, M12 and M13. The diodes D11, D12, D13 are intrinsic to the respective devices and also provide a current path for the kick back current from the inductor L1 during the dead-time when the respective devices M11, M12, M13 are off.

A power supply input 302 is connected to the buck converter 308 and the fast charger 310. The battery isolator 316 may have a PMOS transistor M5 and associated body diodes D5a and D5b The system supply output 314 is connected to the drain of the PMOS transistor M5 and the source of the PMOS transistor M5 is connected to node 318. Node 318 is connected to a first terminal of the up-down converter 330. A second terminal of the up-down converter 330 may be connected to the battery terminal 312. The fast charger output is connected to the battery terminal 312. The system supply output 314 is connected to the system circuitry or further circuitry (not shown)

A battery 320 including a series of two one-cell batteries 320a, 320b may be connected between battery terminal 312 and ground 322. A controller (not shown) is connected to the inductive charger 308, the battery isolator 316, the fast charger 312 and the up-down converter 330.

In operation, the controller may detect an external power supply connected to the power supply input 302. The controller may then control the charging up of the battery 320 using the buck converter 308 which may supply a trickle charge to the battery 320. The up-down converter 330 may step up the buck converter output voltage by a factor of two to supply the battery. The optional fast charger 310 may also be controlled to supply a charging current which is higher than that supplied by the inductive charger 308. The inductive charger output may also supply power to the system circuitry. The controller may control the operation of the buck converter by generating appropriate timing signals applied to the gates of each of the transistors M11, M12 and M13. The controller may be implemented in hardware or a combination of hardware and software similar to controller 104. For buck operation, M11 is always on, and M12 and M13 are switching to ensure bucked output voltage. The duty cycle of M12 determines a ratio of Vin to Vout given by Vout = D ^{∗} Vin in the ideal case.

The controller may isolate the battery from the inductive charger output 314 using battery isolator 306 when only fast charging is required. In this case the inductive charger 308 supplies all the output current to the system circuitry so that for example a mobile device can be used powered directly from an external supply. The controller may disable the fast charging when only trickle charging is required. In some embodiments the fast charger 310 may be omitted.

If no external power supply is connected to the power supply input 302, then the system circuitry must be supplied directly from the battery 320 and the battery management system 300 may be considered to be in a discharge mode. Because of the higher voltage of the dual cell battery, the controller may control the battery isolator 316 to couple the battery terminal 312 to the system supply output 314 via the up down converter 330 which steps down the battery voltage by a factor of two.

The inventors of the present disclosure have appreciated that a switched capacitor conversion circuit may be used bidirectionally to step up voltage by a certain factor in charge mode and step down a voltage from the battery by the same factor in discharge mode. This allows an inductive buck converter to be used which is much simpler and more efficient than boost or buck-boost configurations. Furthermore, the controller may control the up-down converter 230 to isolate the battery as well as or instead of the battery isolator 216. In some examples the battery isolator FET M5 may be controlled by the controller for current control during charging of the battery from the inductive charger 308.

In conventional battery management architectures as shown in figure5, an additional step down converter such as a switched capacitor 2:1 converter is required that can halve the 2S battery voltage and provide the required 1S low voltage to the rest of the system. Further as the number of series stacked batteries increase to 2S and 3 S the conventional charger has to be implemented as a Boost or Buck-Boost switching charger which consume significant PCB area and bill of materials cost. In conventional systems the SC converter is always in the discharge path and only performing as a step down converter. In order to implement dual or multi cell series stacked battery systems, the inductive charger would need to work in a wide input voltage range and therefore be implemented as a boost or a buck-boost. For backward compatibility/ legacy 5V USB input, a minimum of a boost charger is needed.

The battery management system 300 may power the system circuitry in dead battery conditions as the buck charger 308 powers the system directly. In addition to the above advantage, the isolation device M5 can be implemented with a low voltage rated FET which may for example by a voltage of approximately 5. This isolation device M5 can also be implemented as a charging current control FET. The battery management system 300 has reduced complexity which may allow for complete integration of the buck charger 308 and a high efficiency switched capacitor converter 330 into a single device.

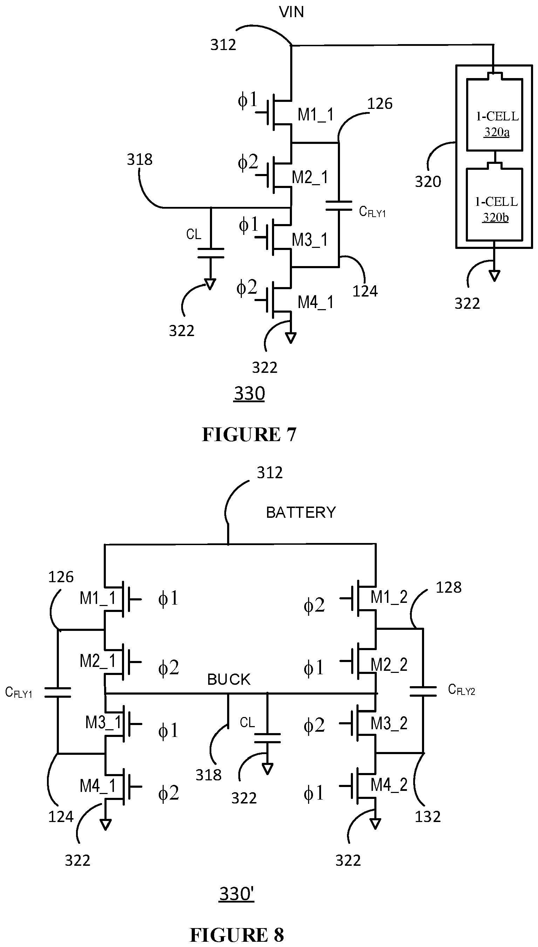

Figure 7 shows an example implementation of a switched capacitor converter configured as an up-down converter 330. The switching circuit including four NMOS transistors M1_1, M2_1, M3_1, and M4_1 and flying capacitor C_{FLY1} is as described in figure 2. The drain of the first NMOS transistor M1_1 is connected to the battery terminal 312. The node 318 in battery management system 300 is connected to the drain of the third NMOS transistor M3_1 and the source of the fourth transistor M4_1. Capacitance C_{L} is the effective load capacitance between the node 318 and the ground 322.

In operation, during discharge mode, the up down converter 330 operates as a down converter to step down the voltage from the battery. During the first switching phase (φ1 active) first and third transistors M1_1 and M3_1 are switched on and second and fourth transistors M2_1 and M4_1 are switched off. The fly capacitor C_{FLY1} is charged and is in series with the node 318 so can deliver current to supply the system circuitry. During the second switching phase (φ2 active) first and third transistors M1_1 and M3_1 are switched on and second and fourth transistors M2_1 and M4_1 are switched off. The fly capacitor C_{FLY1} is in parallel with the load C_{L} and can supply current to the system circuitry. For equal first and second switching phases, the duty cycle is 50% and the voltage at the first terminal 126 of the flying capacitor is Vin/2.

In operation, during charge mode, the up down converter operates as an up converter to step up the voltage from the buck converter to charge the battery 320. During the second switching phase (φ2 active) first and third transistors M1_1 and M3_1 are switched on and second and fourth transistors M2_1 and M4_1 are switched off. The fly capacitor C_{FLY1} is in parallel with the load C_{L} and the first terminal 126 is charged by the inductive charger to the voltage output of the buck converter. During the first switching phase (φ1 active) first and third transistors M1_1 and M3_1 are switched on and second and fourth transistors M2_1 and M4_1 are switched off. The fly capacitor C_{FLY1} second terminal 124 is coupled to node 318 and the first terminal 126 is connected to the battery terminal 312 and the node 318. Consequently the voltage at first terminal 126 is doubled.

Figure 8 shows an alternative up-down converter 330' implementing a 1:2, 2:1 up/down conversion ratio using a switched capacitor network as described in figure 4. The battery terminal 312 is connected to the drain of transistors M1_1 and M1_2 and the node 318 is connected to the connected to the drain of transistors M2_1 and M2_2 the source of the transistors M3_1 and M3_2. The sets of transistor operate in alternate phases as previously described and may reduce the voltage ripple.

It will be appreciated that other topologies of switched capacitor networks may be used for different step up and step down ratios when used in both directions. For example 1:3, 3:1, 1:4, 4:1. The skilled person will appreciate that in in general embodiments may use a switched capacitor network to implement a m:n, n:m up down converter where n is the number of battery cells in series and m is usually 1 but may be any integer value where m < n depending on the battery voltage and the required system circuitry voltage.

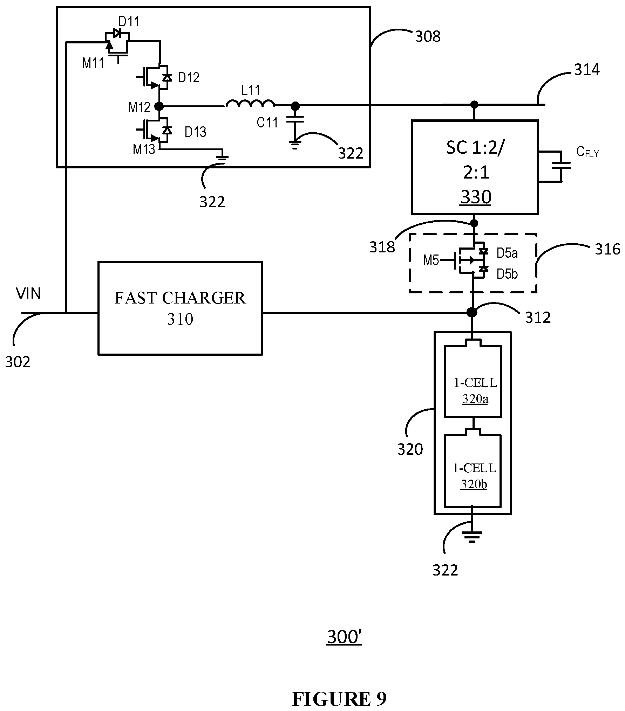

Figure 9 shows a battery management system 400 for a mobile device using a battery with a series connection of 1-cell batteries according to an embodiment. In this embodiment the isolator 316 is coupled between the battery terminal 312 and the node 318 and the up-down converter is connected between the node 318 and the system supply output 314. In other respects the battery management system 400 is the same as battery management system 300. The battery isolation FET M5 may be a higher voltage FET than a conventional battery management system. The switched capacitor converter 330 is directly connected to the system unlike battery management system 300 where the isolator may isolate the switched capacitor converter 330 from the system supply output 314. The current flow in the battery isolation FET M5 during battery discharge mode may be less than battery management system 300. The battery management system 400 the switched capacitor converter 330 functions as a 1:2 in the charging path while the primary buck charger 308 is used. The switched capacitor converter 330 functions in the 2:1 mode in the discharging path.

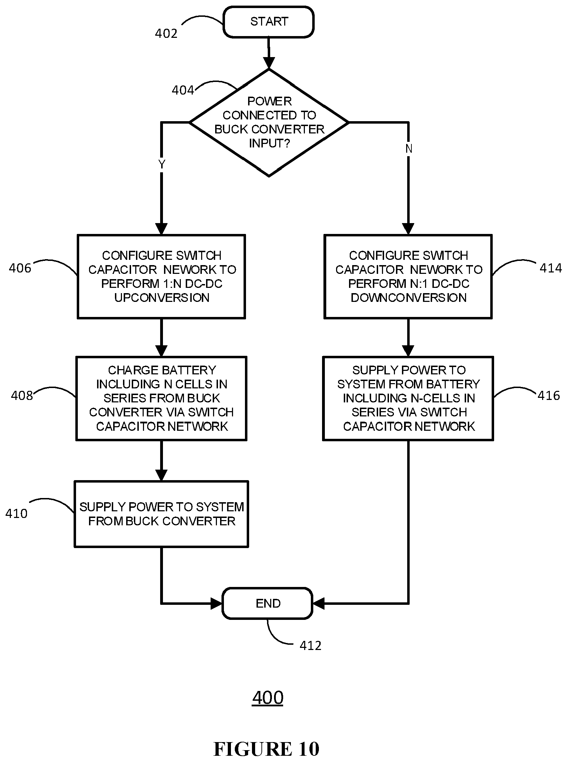

Figure 10 shows a method of battery management for a mobile device including a battery with a series of cells according to an embodiment. In step 402 the method starts. In step 404, a check may be done to see whether power has been connected to a buck converter input. If power is connected to the buck converter input then the method proceeds to step 406. In step 406 a switched capacitor network may be configured to perform a 1 to N DC-DC conversion where N is the number of cells in series in the battery. The method then proceeds to step 408 and the battery may be charged from the buck converter via the switched capacitor network. In step 410 the power may be supplied to the system from the buck converter. Following from step 410 the method then ends at step 412. Returning to step 404 if power is not connected to the buck converter input, then the system is in discharge mode i.e. powered by the battery. In step 414 the switched capacitor network is configured to perform an N to 1 DC-DC down conversion. In step 416 power supply to the system from the battery including an cells in series via the switched capacitor network. Following on from step 416 the method ends at step 412.

Embodiments described herein use MOSFET transistors in the details circuit implementation. However it will be appreciated than in other embodiments other types transistors such as bipolar transistors may be used in the switched capacitor switching network. In some embodiments PMOS transistors may be used instead of NMOS transistors and vice versa. The terms source and drain where used to refer to terminals at the end of the conducting channel of the MOSFET devices and may be used interchangeably according to specific circuit configurations and as generally understood by the skilled person.

A battery management system and method for a mobile device is disclosed. The battery management circuit includes a power supply input configured to receive power from an external power source and a system supply output. A battery supply terminal is configured to be coupled to a battery having a series arrangement of two or more battery cells. A battery charging circuit includes a buck converter having a buck converter input coupled to the power supply input and a buck converter output coupled to the system supply output. A battery isolation circuit and a switched capacitor DC-DC converter are arranged between the system supply output and the battery supply terminal. The switched capacitor DC-DC converter steps up the buck converter output voltage by a step-up factor during battery charging and steps down the battery voltage during battery discharge.

Embodiments described allow a simpler buck converter to be used which may reduce PCB area and implementation cost and support legacy supplies. In conventional systems the SC converter is in the discharge path and operates as a step down converter. In order to implement dual or multi cell series stacked battery systems, the inductive charger would need to work in a wide input voltage range and therefore be implemented as a boost or a buck-boost. For backward compatibility/ legacy 5V USB input, a minimum of a boost charger is needed. Additionally as the number of series stacked batteries increase to 2S and 3S the conventional charger is implemented as a Boost or Buck-Boost switching chargers which consume significant PCB area and BOM cost.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A battery management circuit (200, 300) for a mobile device, the battery management circuit comprising:
a power supply input (202, 302) ;
a system supply output (218, 314) configured to provide power to further circuitry;
a battery supply terminal (212, 312) configured to be coupled to a battery (220,320) comprising a series arrangement of battery cells (220a, 220b; 320a, 320b) ;
a battery charging circuit (208, 308) comprising a buck converter having a buck converter input coupled to the power supply input and a buck converter output coupled to the system supply output (218, 314);
a battery isolation circuit (216, 316) and a switched capacitor DC-DC converter (230, 330) arranged between the system supply output and the battery supply terminal;
wherein the battery management circuit (200,300) is configured in a battery charge mode to control the switched capacitor DC-DC converter (230, 330) to step up the buck converter output voltage by a step-up factor and in a battery discharging mode, to control the switched capacitor DC-DC converter (230, 330) to step down the battery voltage by a step-down factor equal to the step-up factor.

2. The battery management circuit (200, 300) of claim 1 wherein the battery comprises a series arrangement of n cells and the step-down factor and step-up factor is n.

3. The battery management circuit of claim 1 or 2 wherein the battery comprises a series arrangement of 2 cells and the step-down factor and step-up factor is 2.

4. The battery management circuit of any preceding claim wherein the DC-DC converter (330) comprises:
a controller;
a first, second, third and fourth MOS transistor (M1_1,M2_1, M3_1, M4_1) arranged in series between the battery supply terminal (312) and a reference voltage terminal (322);
a first fly capacitor (C_{FLY1}) having a first capacitor terminal coupled to the source of the first MOS transistor (M1_1) and the drain of the second MOS transistor (M2_1) and a second capacitor terminal coupled to the source of the third MOS transistor (M3_1) and the drain of the fourth MOS transistor (M4_1);
wherein the battery supply terminal (312) is coupled to one of the source or drain of the first MOS transistor; (M1_1)
the buck converter output (318) is coupled to the source of the second MOS transistor (M2_1) and the drain of the third MOS transistor (M3_1) ;
wherein the gates of the first and third MOS transistors (M1_1, M3_1) are coupled to a first controller output and the gates of the second and fourth MOS transistors (M2_1, M4_1) are coupled to a second controller output and wherein the controller is configured to:
during a first phase of a DC-DC conversion cycle to switch the first and third MOS transistors (M1_1, M3_1) on and the second and fourth MOS transistors (M2_1, M4_1) off; and
during a second phase of a DC-DC conversion cycle to switch the first and third MOS transistors (M1_1, M3_1) off and the second and fourth MOS transistors (M2_1, M4_1) on.

5. The battery management circuit of claim 4 wherein the DC-DC converter comprises:
a fifth, sixth, seventh and eighth MOS transistor (M1_2, M2_2, M3_2, M4_2) arranged in series between the battery supply terminal (312) and the reference voltage terminal (322);
wherein the battery supply terminal (312) is coupled to one of the source or drain of the fifth MOS transistor (M1_2) ;
a second fly capacitor (C_{FLY2}) having a first capacitor terminal coupled to the source of the fifth MOS transistor (M1_2) and the drain of the sixth MOS transistor (M2_2) and a second capacitor terminal coupled to the source of the seventh MOS transistor (M3_2) and the drain of the eighth MOS transistor (M4_2);
wherein the buck converter output (318) is coupled to the source of the sixth MOS transistor (M2_2) and the drain of the seventh MOS transistor (M3_2);
wherein the gates of the fifth (M1_2) and seventh (M3_2) MOS transistors are coupled to the second controller output and the gates of the sixth (M2_2) and eighth (M4_2) MOS transistors are coupled to the first controller output and wherein the controller is configured to:
during a first phase of a DC-DC conversion cycle to switch the fifth and seventh MOS transistors (M1_2, M3_2) off and the sixth and eighth (M2_2, M4_2) MOS transistors on; and
during a second phase of a DC-DC conversion cycle to switch the fifth and seventh MOS transistors (M1_1, M3_1) on and the sixth and eighth (M1_1, M3_1) MOS transistors off.

6. The battery management circuit of claim 4 or 5 wherein the reference voltage (322) is a ground voltage.

7. The battery management circuit of any of claims 4 to 6 comprising the battery isolation circuit and the switched capacitor DC-DC converter arranged in series between the system supply output and the battery supply terminal.

8. The battery management circuit of claim 7 wherein the battery isolation circuit comprises an MOS transistor (M4) having a gate connected to a controller output and configured to control the MOS transistor to isolate the battery from the buck-converter output and/or to regulate the charging current.

9. The battery management circuit of any preceding claim comprising a series arrangement of the switched capacitor DC-DC converter and the battery isolation circuit between the system supply output and the battery supply terminal.

10. The battery management circuit of claim 9 wherein the battery isolation circuit comprises an MOS transistor having a gate connected to a controller output and configured to control the MOS transistor to isolate the battery from the buck-converter output.

11. The battery management circuit of any preceding claim further comprising a second charging circuit (310) arranged between the power supply input (302) and the battery supply terminal (312); wherein the battery management circuit is further configured to control the buck converter and the second charging circuit to charge the battery when in the battery charging mode and wherein the second charging circuit is configured to supply a higher charging current to a battery connected to the battery supply terminal than the buck converter.

12. A method of battery management (400) for a mobile device, the method comprising:
in a battery charging mode:
configuring (406) a switched capacitor DC-DC converter to step up the buck converter output voltage by a step-up factor;
providing power via the buck converter to charge a battery (408) comprising n cells connected in series via the switched capacitor DC-DC converter;
providing power (410) via a buck converter to further circuitry; and
in a battery discharging mode:
configuring (414) the switched capacitor DC-DC converter to step down the battery voltage by a step-down factor equal to the step-up factor;
providing power (416) to the further circuitry from the battery via the switched capacitor DC-DC converter.

13. The method of claim 12 wherein the battery comprises a series arrangement of n cells and the step-down factor and step-up factor is n.

14. The method of claim 12 or 13 wherein the battery comprises a series arrangement of 2 cells and the step-down factor and step-up factor is 2.

15. The method of any of claims 12 to 14 further comprising:
providing a battery isolation circuit comprising an MOS transistor between the buck converter output and the battery; and
controlling the charging current provided by the buck converter in the charging mode by controlling the gate voltage of the MOS transistor.
